# EUROPEAN PATENT APPLICATION

(11) **EP 4 692 629 A1**
(43) Date of publication of application: **11.02.2026**
(21) Application number: 24779483.7
(22) Date of filing: 13.03.2024
(51) Int. Cl.: F16L 59/02, B32B 5/02, B32B 7/027, B32B 9/00, H01M 10/658, H01M 50/204

(54) **COVER PROTECTOR, METHOD FOR MANUFACTURING COVER PROTECTOR, AND BATTERY MODULE**

(30) Priority: 29.03.2023 JP 2023053777; 09.02.2024 JP 2024018668
(71) Applicant: IBIDEN CO., LTD., Ogaki-shi, Gifu 503-8604 (JP)
(72) Inventor: KOGA, Yoshihiro, Ibi-gun, Gifu 501-0695 (JP); SHIMADA, Shohei, Ibi-gun, Gifu 501-0695 (JP)
(74) Representative: Hoffmann Eitle
(86) International application number: PCT/JP2024/009870
(87) International publication number: WO 2024/203354

(57) **Abstract**

To provide a cover protector capable of protecting a heat insulation material from scattered matters and further improving a heat insulation performance, a production method therefor, and a battery module. A cover protector (1) includes a heat insulation material (2) containing inorganic particles, an inorganic fiber sheet (3), and an adhesive layer (4) bonding the heat insulation material (2) and the inorganic fiber sheet (3) and containing an organic material. The adhesive layer (4) includes a plurality of island-like portions (5) and a mesh-like portion (6) connecting the plurality of island-like portions (5) to each other when viewed in a stacking direction of the heat insulation material (2) and the inorganic fiber sheet (3).

## Description

### TECHNICAL FIELD

The present invention relates to a cover protector, a production method therefor, and a battery module including the cover protector.

### BACKGROUND ART

In recent years, a lithium ion secondary battery has been used in electric vehicles and the like for environmental conservation. However, since the lithium ion secondary battery contains an organic electrolytic solution, when the battery ignites during thermal runaway, there is a risk that a flame is generated and damages a battery pack.

As a countermeasure, for example, Patent Literature 1 proposes a multilayer material for use as a heat insulation barrier in an electric energy storage system. The multilayer material includes at least one inorganic fabric layer bonded to a nonwoven fabric layer containing inorganic particles and inorganic fibers by an inorganic adhesive, in which the inorganic adhesive contains at least 99 wt% of an inorganic component and 0.01 wt% or more and less than 1 wt% of an organic additive.

### CITATION LIST

### PATENT LITERATURE

Patent Literature 1: WO 2021/022130

### SUMMARY OF INVENTION

### TECHNICAL PROBLEM

With the recent increase in capacity of batteries, the number of stacks is also increasing, and the amount of organic electrolytic solution is also increasing, so that there is a strong demand for safety countermeasures when a battery undergoes thermal runaway. However, the multilayer material described in Patent Literature 1 cannot obtain a sufficient heat insulation performance.

The present invention has been made in view of the above problems, and an object of the present invention is to provide a cover protector capable of protecting a heat insulation material from scattered matters and further improving a heat insulation performance, a production method therefor, and a battery module.

### SOLUTION TO PROBLEM

The above object of the present invention is achieved by the following configuration [1] relating to a cover protector.
[1] A cover protector including:
   a heat insulation material containing inorganic particles;
   an inorganic fiber sheet; and
   an adhesive layer bonding the heat insulation material and the inorganic fiber sheet and containing an organic material, in which
   the adhesive layer includes a plurality of island-like portions and a mesh-like portion connecting the plurality of island-like portions to each other when viewed in a stacking direction of the heat insulation material and the inorganic fiber sheet.
   Preferred embodiments of the present invention relating to the cover protector relate to the following [2] to [8].
[2] The cover protector according to [1], in which the organic material contained in the adhesive layer is at least one kind selected from a synthetic rubber, a polyolefin-based organic material, a polyamide-based organic material, and a polyurethane-based organic material.
[3] The cover protector according to [1] or [2], in which a content of the organic material is 80 mass% or more with respect to a total mass of the adhesive layer.
[4] The cover protector according to any one of [1] to [3], in which the mesh-like portion includes a plurality of linear bodies, and the plurality of linear bodies extend in a plurality of directions while partially intersecting each other to form the mesh-like portion.
[5] The cover protector according to any one of [1] to [4], in which a void portion is provided between the inorganic fiber sheet and the heat insulation material.
[6] The cover protector according to any one of [1] to [5], in which the organic material constituting the adhesive layer has entered a region of the inorganic fiber sheet from a surface in contact with the adhesive layer to an inside.
[7] The cover protector according to any one of [1] to [6], in which the adhesive layer contains a part of the inorganic particles contained in the heat insulation material.
[8] The cover protector according to any one of [1] to [7], in which the inorganic fiber sheet is obtained by processing at least one kind of fiber selected from silica fibers, alumina fibers, glass fibers, and metal fibers into a sheet shape.
   In addition, the above object of the present invention is achieved by the following configuration [9] relating to a method for producing a cover protector.
[9] A method for producing the cover protector according to any one of [1] to [8], the method including:
   a disposition step of disposing an adhesive material constituting the adhesive layer between the heat insulation material and the inorganic fiber sheet; and
   a bonding step of heating and pressurizing a region in which the heat insulation material, the adhesive material, and the inorganic fiber sheet are stacked, in which
   the disposition step includes a step of disposing a plurality of fibrous adhesive materials extending in a plurality of directions between the heat insulation material and the inorganic fiber sheet, and the adhesive materials are disposed such that a disposition amount of the adhesive materials in a plurality of first regions is larger than a disposition amount of the adhesive materials in a second region other than the first regions, and
   in the bonding step, the island-like portions are formed in the first regions, and the mesh-like portion is formed in the second region.
   Preferred embodiments of the present invention relating to the method for producing a cover protector relate to the following [10] to [12].
[10] The method for producing a cover protector according to [9], in which each of the first regions is a region in which the plurality of fibrous adhesive materials overlap each other.
[11] The method for producing a cover protector according to [9], in which the adhesive material is obtained by processing fibers composed of an organic material and extending in a plurality of directions into a sheet shape, and the fibers are disposed such that a density of the fibers in the first regions is higher than a density of the fibers in the second region.
[12] The method for producing a cover protector according to [11], in which each of the first regions is a region in which fibers overlap each other.
   Further, the above object of the present invention is achieved by the following configuration [13] relating to a battery module.
[13] A battery module including:
   the cover protector according to any one of [1] to [8];
   a storage battery; and
   a battery case housing the cover protector and the storage battery.
   In addition, a preferred embodiment of the present invention relating to the battery module relates to the following [14].
[14] The battery module according to [13], in which
   the battery case has a ceiling surface, a side wall surface, and a bottom wall surface inside,
   the heat insulation material is disposed so as to face at least one selected from the ceiling surface, the side wall surface, and the bottom wall surface, and
   the cover protector is attached inside the battery case.

### ADVANTAGEOUS EFFECTS OF INVENTION

In the cover protector according to the present invention, the inorganic fiber sheet and the heat insulation material are bonded to each other by the adhesive layer, and the heat insulation material contains the inorganic fibers and/or infusible fibers, and thus the cover protector has an excellent heat insulation performance and flameproof performance. In addition, since the inorganic fiber sheet is provided, it is possible to prevent scattered matters from directly colliding with the heat insulation material. Further, since the adhesive layer has a specific structure, it is possible to improve the heat insulation performance while maintaining an adhesive performance.

In addition, since the cover protector according to the present invention can be produced simply by sandwiching the adhesive material containing the organic material between the inorganic fiber sheet and the heat insulation material and performing heating and pressurization, the cover protector can be easily produced at a low production cost.

Further, in the battery module according to the present invention, since the cover protector according to the present invention is installed in the battery case that houses the storage battery, it is possible to suppress damage due to scattered matters during thermal runaway, and it is possible to more reliably prevent spread of fire to the outside even when flame is generated.

### BRIEF DESCRIPTION OF DRAWINGS

[Fig. 1] Fig. 1 is a schematic cross-sectional view showing a cover protector according to the present embodiment.
[Fig. 2] Fig. 2 is a photograph substituted for a drawing showing an adhesive layer in the cover protector shown in Fig. 1 as viewed in a stacking direction.
[Fig. 3] Fig. 3 is a photograph substituted for a drawing showing a partial cross section of the cover protector shown in Fig. 1.
[Fig. 4] Fig. 4 is a schematic diagram showing an example of a method for producing the cover protector according to an embodiment of the present invention.
[Fig. 5] Fig. 5 is a cross-sectional view schematically showing a battery module according to an embodiment of the present invention.

### DESCRIPTION OF EMBODIMENTS

Hereinafter, an embodiment of the present invention will be described in detail with reference to the drawings. Note that, the present invention is not limited to the embodiment described below, and can be freely changed and implemented without departing from the gist of the present invention.

### [Cover Protector]

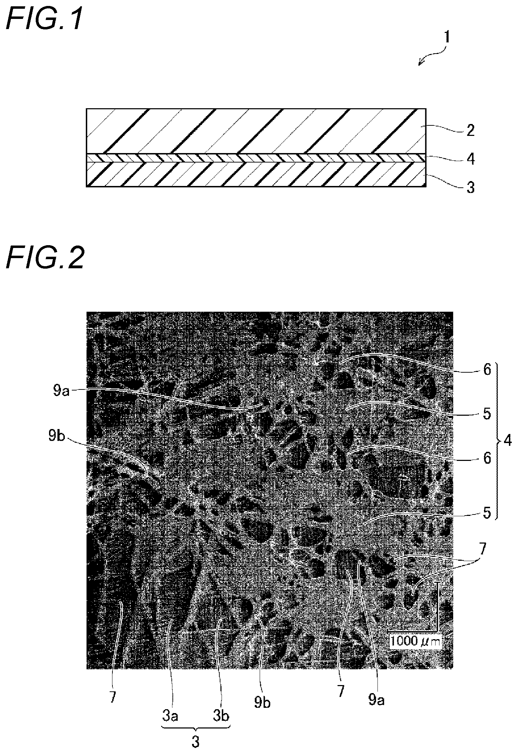

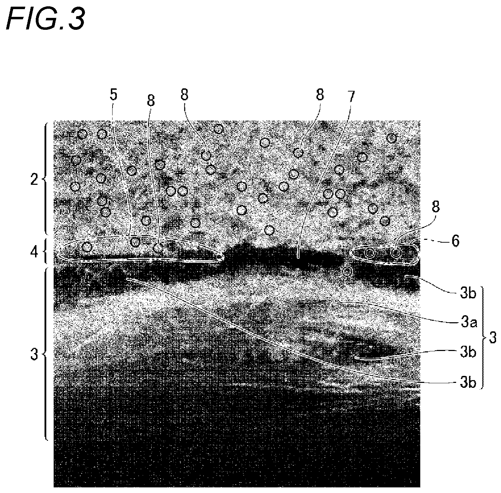

Fig. 1 is a schematic cross-sectional view showing a cover protector according to the present embodiment. Fig. 2 is a photograph substituted for a drawing showing an adhesive layer in the cover protector shown in Fig. 1 as viewed in a stacking direction. Fig. 3 is a photograph substituted for a drawing showing a partial cross section of the cover protector shown in Fig. 1. As shown in Fig. 1, a cover protector 1 includes a heat insulation material 2 containing inorganic particles, an inorganic fiber sheet 3, and an adhesive layer 4 that bonds the heat insulation material 2 and the inorganic fiber sheet 3 to each other. The adhesive layer 4 contains an organic material.

As shown in Fig. 2, when viewed in a stacking direction parallel to a stacking direction of the heat insulation material 2 and the inorganic fiber sheet 3, the adhesive layer 4 includes a plurality of island-like portions 5 and a mesh-like portion 6 connecting the plurality of island-like portions 5 to each other. More specifically, the mesh-like portion 6 includes a plurality of linear bodies, and the plurality of linear bodies extend in a plurality of various directions while partially intersecting each other to form the mesh-like portion 6. The mesh-like portion 6 connects the plurality of island-like portions 5 to each other.

The linear body constituting the mesh-like portion 6 is not limited to a linear body, and may be a curved linear body. In addition, the linear bodies extend in the plurality of directions from an intersection point where the linear bodies intersect each other, but the directions are not limited to four directions, and may be three directions or five or more directions. Widths of the linear bodies do not need to be uniform, and the mesh-like portion 6 may include a narrow linear body 9a having a width of 100 µm or less and a wide linear body 9b having a width twice or more the width of the narrow linear body 9a.

Each of the island-like portions 5 has a shape that is wider than the width of the linear body (length in a direction orthogonal to a longitudinal direction) and that spreads in a planar shape. Note that, a width of the island-like portion 5 in a short direction is, for example, three times or more the width of the wide linear body. **In** the adhesive layer 4, the island-like portions 5 are formed to be dispersed, but intervals between the adjacent island-like portions 5 may not be constant, and the island-like portions 5 close to each other or the island-like portions 5 separated from each other may be present.

As described above, the plurality of linear bodies extend in various directions, and accordingly, void portions 7 having various sizes are formed in a region in which the linear bodies are not present around the island-like portions 5. A shape of the void portion 7 as viewed in the stacking direction is a flat circular shape or a polygonal shape. A large number of void portions 7 having a small area are formed in a region between the adjacent island-like portions 5, and a large void portion 7 having a large area is formed in a region between the adjacent island-like portions 5. Note that, in the present embodiment, the inorganic fiber sheet 3 is formed by alternately knitting a weft thread 3a and a warp thread 3b each composed of an inorganic fiber.

As shown in Fig. 3, since the adhesive layer 4 includes the mesh-like portion 6, the void portion 7 is formed in a region in which the island-like portion 5 and the mesh-like portion 6 are not present between the heat insulation material 2 and the inorganic fiber sheet 3. Although inorganic particles 8 contained in the heat insulation material 2 are indicated by dots in the drawing, the adhesive layer 4 contains some of the inorganic particles 8. Further, in the inorganic fiber sheet 3, the organic material contained in the adhesive layer 4 has entered a region from a surface in contact with the adhesive layer 4 to the inside.

Since the cover protector 1 according to the present embodiment configured as described above includes the heat insulation material 2 having a heat insulation performance, it is possible to obtain an excellent heat insulation effect and flameproof effect. **In** addition, since the inorganic fiber sheet 3 bonded to the heat insulation material 2 is provided, the heat insulation material 2 can be protected by the inorganic fiber sheet 3 in the case where an article is damaged and scattered around the cover protector 1. Therefore, the damage to the heat insulation material 2 can be suppressed, and an excellent heat insulation effect and flameproof effect can be maintained.

Further, in the present embodiment, since the adhesive layer 4 that bonds the heat insulation material 2 and the inorganic fiber sheet 3 to each other includes the island-like portion 5 and the island-like portion 5 has a shape that spreads in a planar shape, the heat insulation material 2 and the inorganic fiber sheet 3 can be favorably bonded to each other. In addition, since the void portion 7 is formed between the heat insulation material 2 and the inorganic fiber sheet 3, the heat insulation performance can be further improved as compared with the case where the heat insulation material 2 and the inorganic fiber sheet 3 are bonded to each other with an adhesive applied in a planar shape to one surface of the heat insulation material 2 or the inorganic fiber sheet 3. Further, since the adhesive layer 4 includes the void portions 7 having various sizes, in a state where the cover protector 1 is not pressed in a thickness direction thereof, the void portion 7 having a large size contribute to improving a heat insulation property. Then, in a state where the cover protector 1 is pressed in the thickness direction thereof, the void portion 7 having a small size is supported by the surrounding linear body, and a decrease in volume is suppressed, so that the heat insulation performance can be maintained.

Further, in the present embodiment, since the mesh-like portion 6 has the characteristic shape as described above, even in the case where the cover protector 1 is pressed or bent, the mesh-like portion 6 is flexibly bent, and the inorganic fiber sheet 3 can be suppressed from being detached from the heat insulation material 2. In addition, when the linear body has a large width at a base portion close to the island-like portion 5, it is possible to suppress the linear body from being divided from the island-like portion 5 in the case where the cover protector 1 is pressed or bent. As a result, the adhesive layer 4 can follow a change in the shape of the cover protector 1, and the detachment of the inorganic fiber sheet 3 from the heat insulation material 2 can be further suppressed.

In addition, since the inorganic particles 8 contained in the heat insulation material 2 are contained in the adhesive layer 4 and the organic material contained in the adhesive layer 4 has entered the inorganic fiber sheet 3, a bonding force between the heat insulation material 2 and the inorganic fiber sheet 3 can be further increased.

Hereinafter, materials for the heat insulation material 2, the inorganic fiber sheet 3, and the adhesive layer 4 constituting the cover protector 1 according to the present embodiment will be described in detail.

### [Heat Insulation Material]

The heat insulation material 2 used in the cover protector according to the present embodiment is not particularly limited as long as it has a heat insulation effect. A thermal conductivity can be mentioned as an indicator indicating the heat insulation effect. In the present embodiment, the thermal conductivity of the heat insulation material 2 is preferably less than 1 (W/m·K), more preferably less than 0.5 (W/m·K), and still more preferably less than 0.2 (W/m·K). Further, the thermal conductivity of the heat insulation material 2 is even more preferably less than 0.1 (W/m·K), even still more preferably less than 0.05 (W/m·K), and particularly preferably less than 0.02 (W/m·K).

Note that, the thermal conductivity of the heat insulation material 2 can be measured in accordance with "Testing method for thermal conductivity of refractories" described in JIS R 2251.

The heat insulation material 2 contains inorganic particles, and as other components, for example, at least one kind selected from inorganic fibers, organic fibers, and organic particles can be used. Specific examples thereof are shown below.

### <Inorganic Particles>

As the inorganic particles, a single kind of inorganic particle may be used, or two or more kinds of inorganic particles may be used in combination. From the viewpoint of the heat insulation effect, as the kind of the inorganic particles, particles composed of at least one kind of inorganic material selected from oxide particles, carbide particles, nitride particles, and inorganic hydrate particles are preferably used, and more preferably oxide particles are used. The form thereof is not particularly limited. It is preferable to contain at least one kind selected from nanoparticles, hollow particles, and porous particles. Specifically, silica nanoparticles, metal oxide particles, inorganic balloons such as microporous particles or hollow silica particles, particles composed of a thermally expandable inorganic material, particles composed of a hydrous porous material, or the like can also be used.

When an average secondary particle diameter of the inorganic particles is 0.01 µm or more, the inorganic particles are easily available and an increase in production cost can be suppressed. When the average secondary particle diameter is 200 µm or less, a desired heat insulation effect can be obtained. Therefore, the average secondary particle diameter of the inorganic particles is preferably 0.01 µm or more and 200 µm or less, and more preferably 0.05 µm or more and 100 µm or less.

Note that, when two or more kinds of inorganic particles having different heat insulation effects are combined, a heating element can be cooled in multiple stages and a heat absorption effect can be exhibited over a wider temperature range. Specifically, it is preferable to use large-diameter particles and small-diameter particles in combination. For example, in the case of using nanoparticles as one of the inorganic particles, it is preferable to contain inorganic particles composed of a metal oxide as the other inorganic particles. Hereinafter, the inorganic particles will be described in more detail, with the small-diameter inorganic particles as first inorganic particles and the large-diameter inorganic particles as second inorganic particles.

### <First Inorganic Particles>

### (Oxide Particles)

When oxide particles are used as the first inorganic particles, radiant heat transfer can be suppressed particularly in a high temperature range with abnormal heat generation or the like. As the oxide particles, at least one kind of particle selected from silica, titania, zirconia, zircon, barium titanate, zinc oxide, and alumina can be used. That is, among the above oxide particles that can be used as the inorganic particles, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particles.

Note that, since the oxide particles have a high refractive index and a strong effect of diffusely reflecting light, the particle diameter of the oxide particles may influence the effect of reflecting the radiant heat. Therefore, when an average primary particle diameter of the oxide particles is limited to a predetermined range, an even higher heat insulation property can be obtained.

### (Average primary particle diameter of oxide particles: 0.001 µm or more and 50 µm or less)

When the average primary particle diameter of the oxide particles is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the cover protector can be suppressed, and the heat insulation property can be further improved. On the other hand, when the average primary particle diameter of the oxide particles is 50 µm or less, even with compression, the number of contact points between the particles does not increase, and it is difficult to form a conductive heat transfer path. Therefore, the influence on the heat insulation property particularly in a normal temperature range where conductive heat transfer is dominant can be reduced.

Note that, in the present invention, the average primary particle diameter can be determined by observing particles with a microscope, comparing the particles with a standard scale, and taking an average of any 10 particles.

### (Nanoparticles)

In the present invention, the nanoparticles refer to nanometer-order particles having a spherical or nearly spherical shape and having an average primary particle diameter of less than 1 µm. The nanoparticles have a low density and thus suppress the conductive heat transfer, and when the nanoparticles are used as the first inorganic particles, void portions are further finely dispersed, so that an excellent heat insulation property of suppressing convective heat transfer can be obtained. Therefore, it is preferable to use nanoparticles since it can suppress the conduction of heat between adjacent nanoparticles during normal use of a battery in a normal temperature range.

Further, when nanoparticles having a small average primary particle diameter is used as the oxide particles, even in the case where the heat insulation material is compressed by expansion due to thermal runaway of a battery cell and the internal density increases, an increase in conductive heat transfer of the heat insulation material can be suppressed. This is thought to be because the nanoparticles tend to form fine void portions between particles due to a repulsive force caused by static electricity, and the bulk density thereof is low, so that the particles are used for filling so as to provide a cushioning property.

Note that, in the case of using the nanoparticles as the first inorganic particles, the kind thereof is not particularly limited as long as the above definition of nanoparticles is met. For example, since silica nanoparticles are a material having a high heat insulation property and have a few contact points between particles, the amount of heat conducted by the silica nanoparticles is smaller than that in a case of using silica particles having a large particle diameter. In addition, since generally available silica nanoparticles have a bulk density of about 0.1 (g/cm³), even when a large compressive stress is applied to, for example, the heat insulation material, the size (area) or the number of contact points between the silica nanoparticles does not increase remarkably, and the heat insulation property can be maintained. Therefore, it is preferable to use silica nanoparticles as the nanoparticles. Examples of the silica nanoparticles include wet silica, dry silica, and aerogel. A silica nanoparticles that are particularly suitable for the present embodiment will be described below.

### (Average primary particle diameter of nanoparticles: 1 nm or more and 100 nm or less)

When the average primary particle diameter of the nanoparticles is limited to a predetermined range, an even higher heat insulation property can be obtained.

That is, when the average primary particle diameter of the nanoparticles is 1 nm or more and 100 nm or less, the convective heat transfer and the conductive heat transfer of the heat within the heat insulation material can be suppressed particularly in a temperature range of lower than 500°C, and the heat insulation property can be further improved. In addition, even in the case where a compressive stress is applied, void portions remaining between the nanoparticles and contact points between many particles can suppress the conductive heat transfer, and the heat insulation property of the heat insulation material can be maintained.

Note that, the average primary particle diameter of the nanoparticles is more preferably 2 nm or more, and still more preferably 3 nm or more. On the other hand, the average primary particle diameter of the nanoparticles is more preferably 50 nm or less, and still more preferably 10 nm or less.

### (Inorganic Hydrate Particles)

The inorganic hydrate particles exhibit a so-called "heat absorption effect" that the inorganic hydrate particles receive heat from the heating element, thermally decompose when reaching a thermal decomposition start temperature or higher, releases crystal water thereof, and lower the temperature of the heating element and surroundings. The inorganic hydrate particles form a porous material after releasing the crystal water, and exhibit a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, in a battery cell that has experienced thermal runaway, the temperature rapidly rises to higher than 200°C and continues to rise to around 700°C. Therefore, it is preferable that the inorganic particles contained in the heat insulation material 2 are composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particles: 0.01 µm or more and 200 µm or less)

In the case of using the inorganic hydrate particles as the first inorganic particles, when the average particle diameter thereof is too large, it takes a certain amount of time for the first inorganic particles (inorganic hydrate) near the center of the heat insulation material 2 to reach the thermal decomposition temperature thereof, so that the first inorganic particles near the center of the heat insulation material 2 may not be completely thermally decomposed. Therefore, the average secondary particle diameter of the inorganic hydrate particles is preferably 0.01 µm or more and 200 µm or less, and more preferably 0.05 µm or more and 100 µm or less.

### (Particles Composed of Thermally Expandable Inorganic Material)

Examples of the thermally expandable inorganic material include vermiculite, bentonite, mica, and perlite.

### (Particles Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

The heat insulation material 2 used in the present invention may contain inorganic balloons as the first inorganic particles.

When inorganic balloons are contained, the convective heat transfer or the conductive heat transfer of the heat within the heat insulation material 2 can be suppressed in a temperature range of lower than 500°C, and the heat insulation property of the heat insulation material 2 can be further improved.

As the inorganic balloons, at least one kind selected from whitebait balloons, silica balloons, fly ash balloons, barite balloons, and glass balloons can be used.

### (Content of inorganic balloons: 60 mass% or less with respect to total mass of heat insulation material)

A content of the inorganic balloons is preferably 60 mass% or less with respect to a total mass of the heat insulation material.

### (Average particle diameter of inorganic balloons: 1 µm or more and 100 µm or less)

An average particle diameter of the inorganic balloons is preferably 1 µm or more and 100 µm or less.

### <Second Inorganic Particles>

In the case where the heat insulation material 2 contains two kinds of inorganic particles, the second inorganic particles are not particularly limited as long as it is different from the first inorganic particles in material, particle diameter, or the like. As the second inorganic particles, oxide particles, carbide particles, nitride particles, inorganic hydrate particles, silica nanoparticles, metal oxide particles, inorganic balloons such as microporous particles or hollow silica particles, particles composed of a thermally expandable inorganic material, particles composed of a hydrous porous material, or the like can be used. Details of these are as described above.

Note that, nanoparticles have extremely low conductive heat transfer and can maintain an excellent heat insulation property even when a compressive stress is applied to the heat insulation material. In addition, metal oxide particles such as titania has a high effect of blocking radiant heat. Further, when large-diameter inorganic particles and small-diameter inorganic particles are used, the small-diameter inorganic particles enter gaps between the large-diameter inorganic particles, leading to a more dense structure, and the heat insulation effect can be improved. Therefore, in the case of using, for example, nanoparticles as the first inorganic particles, it is preferable that the heat insulation material further contains, as the second inorganic particles, particles composed of a metal oxide having a diameter larger than that of the first inorganic particles.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking the radiant heat in a high temperature range of 500°C or higher. Therefore, titania is most preferably used.

In the case where at least one kind of particle selected from silica nanoparticles and silica aerogel is used as the first inorganic particles, and at least one kind of particle selected from titania, zircon, zirconia, silicon carbide, zinc oxide, and alumina is used as the second inorganic particles, in order to obtain an excellent heat insulation performance within a temperature range of 90°C or lower, a content of the first inorganic particles is preferably 50 mass% or more, more preferably 60 mass% or more, and still more preferably 70 mass% or more, with respect to a total mass of the inorganic particles. In addition, the content of the first inorganic particles is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 90°C, a content of the second inorganic particles is preferably 5 mass% or more, more preferably 10 mass% or more, and still more preferably 20 mass% or more, with respect to the total mass of the inorganic particles. In addition, the content of the second inorganic particles is preferably 50 mass% or less, more preferably 40 mass% or less, and still more preferably 30 mass% or less, with respect to the total mass of the inorganic particles.

### (Average primary particle diameter of second inorganic particles)

In the case where the second inorganic particles composed of a metal oxide are contained in the heat insulation material, when an average primary particle diameter of the second inorganic particles is 1 µm or more and 50 µm or less, the radiant heat transfer can be efficiently suppressed in a high temperature range of 500°C or higher. The average primary particle diameter of the second inorganic particles is more preferably 5 µm or more and 30 µm or less, and most preferably 10 µm or less.

### (Content of Inorganic Particles)

In the present embodiment, when a total content of the inorganic particles in the heat insulation material 2 is appropriately controlled, a sufficient heat insulation property can be ensured in the heat insulation material 2.

The total content of the inorganic particles is preferably 60 mass% or more, and more preferably 70 mass% or more, with respect to the total mass of the heat insulation material. When the total content of the inorganic particles is too large, the content of the organic fibers decreases relatively. Therefore, in order to obtain a sufficient framework reinforcement effect and inorganic particle retention effect, the total content of the inorganic particles is preferably 95 mass% or less, and more preferably 90 mass% or less, with respect to the total mass of the heat insulation material.

Note that, the content of the inorganic particles in the heat insulation material can be calculated, for example, by heating the heat insulation material at 800°C, decomposing organic components, and then measuring the mass of the remaining portion.

### <Inorganic Fibers>

As the inorganic fibers, a single kind of inorganic fiber may be used, or two or more kinds of inorganic fibers may be used in combination. Examples of the inorganic fibers include ceramic-based fibers such as silica fibers, alumina fibers, alumina silicate fibers, zirconia fibers, carbon fibers, soluble fibers, refractory ceramic fibers, aerogel composite, magnesium silicate fibers, alkaline earth silicate fibers, potassium titanate fibers, silicon carbide fibers, and potassium titanate whisker fibers, glass-based fibers such as a glass fiber, glass wool, and slag wool, and natural mineral-based fibers such as rock wool, basalt fibers, wollastonite, and mullite fibers.

These inorganic fibers are preferred in terms of heat resistance, strength, easy availability, and the like. Among the inorganic fibers, at least one kind selected from silica fibers, alumina fibers, alumina silicate fibers, zirconia fibers, glass fibers, and natural mineral-based fibers other than these fibers is particularly preferred from the viewpoint of handleability.

The cross-sectional shape of the inorganic fibers is not particularly limited, and examples thereof include a circular cross section, a flat cross section, a hollow cross section, a polygonal cross section, and a core cross section. Among them, irregular cross section fibers having a hollow cross section, a flat cross section, or a polygonal cross section can be preferably used since the heat insulation property is slightly improved.

### (Average Fiber Length of Inorganic Fibers)

The lower limit of an average fiber length of the inorganic fibers is preferably 0.1 mm, and the lower limit is more preferably 0.5 mm. On the other hand, the upper limit of the average fiber length of the inorganic fibers is preferably 50 mm, and the upper limit is more preferably 10 mm. When the average fiber length of the inorganic fibers is less than 0.1 mm, the inorganic fibers are unlikely to be entangled with each other, and the mechanical strength of the heat insulation material may decrease. On the other hand, when the average fiber length is more than 50 mm, a reinforcement effect can be obtained, but the inorganic fibers may not be able to entangle tightly with each other, or a single inorganic fiber may curl up, and thus the heat insulation property may decrease.

The lower limit of an average fiber diameter of the inorganic fibers is preferably 1 µm, the lower limit is more preferably 2 µm, and the lower limit is still more preferably 3 µm. On the other hand, the upper limit of the average fiber diameter of the inorganic fibers is preferably 15 µm, and the upper limit is more preferably 10 µm. When the average fiber diameter of the inorganic fibers is less than 1 µm, the mechanical strength of the inorganic fibers may decrease. In addition, from the viewpoint of the influence on human health, the average fiber diameter of the inorganic fibers is preferably 3 µm or more. On the other hand, when the average fiber diameter of the inorganic fibers is larger than 15 µm, solid heat transfer using the inorganic fibers as a medium may increase, resulting in a decrease in heat insulation property, and the moldability and the strength of the heat insulation material may deteriorate.

### (Content of Inorganic fibers)

In the present embodiment, in the case where the heat insulation material 2 contains inorganic fibers, a content of the inorganic fibers is preferably 3 mass% or more and 15 mass% or less with respect to the total mass of the heat insulation material.

In addition, the content of the inorganic fibers is preferably 5 mass% or more and 10 mass% or less with respect to the total mass of the heat insulation material. With such contents, a shape retention property, pressing force resistance, wind pressure resistance, and an ability to retain the inorganic particles of the inorganic fibers are exhibited in a well-balanced manner. In addition, when the content of the inorganic fibers is appropriately controlled, the organic fiber and the inorganic fiber are entangled with each other to form a three-dimensional network, so that an effect of retaining the inorganic particles and other blending materials to be described later can be further improved.

### <Organic Fibers>

The organic fibers have an effect of imparting flexibility to the heat insulation material, and have an effect of increasing the strength of the heat insulation material by the organic fibers forming a framework. In addition, when the inorganic particles and other organic fibers are fused to the surface of the organic fibers, the effect of increasing the strength of the heat insulation material and the effect of retaining the shape of the heat insulation material can be further improved. In addition, when the heat insulation material contains the organic fibers in an appropriate content, a plurality of void portions are formed inside the heat insulation material, and when the heat insulation material is heated, air and moisture can be released to the outside through the void portions.

As the material for the organic fibers in the heat insulation material 2, organic fibers of a single component such as cellulose fibers, polyvinyl alcohol (PVA) fibers, polyethylene fibers, nylon fibers, polyurethane fibers, ethylene-vinyl alcohol copolymer fibers, and the like can be used.

Note that, in the case of producing the heat insulation material by using a papermaking method, since it is difficult to raise the heating temperature higher than 250°C, a glass transition point of the organic fibers is preferably 250°C or lower, and more preferably 200°C or lower.

The lower limit value of the glass transition point of the organic fibers is also not particularly limited. **In** the case of using a resin binder, when a difference from a glass transition point of the resin binder is 10°C or more, the resin binder solidifies after the organic fibers in a semi-molten state completely solidify in a cooling step during production, so that a sufficient framework reinforcement effect by the resin binder can be obtained. Therefore, the difference between the glass transition point of the resin binder and the glass transition point of the organic fibers is preferably 10°C or more, and more preferably 30°C or more.

On the other hand, when the difference in glass transition point therebetween is 130°C or less, the time from a time when the organic fibers completely solidify to a time when the resin binder begins to solidify can be appropriately adjusted, and the resin binder solidifies while remaining in a well-dispersed state, so that the framework reinforcement effect can be further obtained. Therefore, the difference between the glass transition point of the resin binder and the glass transition point of the organic fibers is preferably 130°C or less, more preferably 120°C or less, still more preferably 100°C or less, even more preferably 80°C or less, and particularly preferably 70°C or less.

As the organic fibers, binder fibers having a core-sheath structure can also be used. The binder fibers having a core-sheath structure includes a core portion extending in a longitudinal direction of the fiber, and a sheath portion formed to cover an outer peripheral surface of the core portion. In this case, the core portion is composed of a first organic material, the sheath portion is composed of a second organic material, and a melting point of the first organic material is higher than a melting point of the second organic material.

### (First Organic Material)

In the present embodiment, in the case of using the binder fibers having a core-sheath structure, the first organic material constituting the core portion is not particularly limited as long as it has a melting point higher than that of the sheath portion, that is, the second organic material, present on the outer peripheral surface of the core portion. Examples of the first organic material include at least one kind selected from a polyethylene terephthalate, a polypropylene, and nylon.

### (Second Organic Material)

The second organic material is not particularly limited as long as it has a melting point lower than the first organic material constituting the organic fibers. Examples of the second organic material include at least one kind selected from a polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### (Content of Organic Fibers)

When a content of the organic fibers in the heat insulation material 2 is appropriately controlled, a sufficient framework reinforcement effect can be obtained.

The content of the organic fibers is preferably 5 mass% or more, and more preferably 10 mass% or more, with respect to the total mass of the heat insulation material. When the content of the organic fibers is too large, the content of the inorganic particles decreases relatively. Therefore, in order to obtain a desired heat insulation performance, the content of the organic fibers is preferably 25 mass% or less, and more preferably 20 mass% or less, with respect to the total mass of the heat insulation material.

### (Fiber Length of Organic Fibers)

A fiber length of the organic fibers is not particularly limited, and from the viewpoint of ensuring the moldability and the processability, an average fiber length of the organic fibers is preferably 10 mm or less.

On the other hand, from the viewpoint of making the organic fiber function as a framework and ensuring a compressive strength of the heat insulation material, the average fiber length of the organic fibers is preferably 0.5 mm or more.

### (Infusible Fibers)

The heat insulation material 2 may contain infusible fibers as the fibers. Examples of the infusible fibers include fibers obtained by subjecting thermoplastic resins, such as polyacrylonitrile, cellulose, and pitch, to an infusibility treatment. Note that, the infusible fibers are, for example, fibers that have been subjected to an infusibility treatment, and examples of the infusibility treatment include a method of crosslinking by irradiation with radiation, electron beams, or the like, and a method of exposing a material to a high temperature in oxygen or water vapor and making the material infusible by the action of oxygen.

### (Carbon Content)

The infusible fibers preferably has a carbon content of 55 mass% to 95 mass%. When the carbon content is 55 mass% or more, a weight loss due to thermal decomposition is already underway, so that the heat insulation material shrinks little due to the thermal decomposition, and retains the original shape and maintains the heat insulation property even when exposed directly to flame during thermal runaway. When the carbon content is 95 mass% or less, an endothermic reaction occurs to remove components other than carbon and to change the structure to a structure consisting only of carbon, so that a time for heat to reach a back surface of a flameproof structure can be delayed.

A preferred lower limit of the carbon content is 60 mass% or more. In addition, a preferred upper limit of the carbon content is 90 mass% or less, and a more preferred upper limit of the carbon content is 85 mass% or less.

The carbon content can be adjusted by a heat treatment. For example, a heat treatment in the air or in oxygen within a range of 150°C to 300°C can further promote the infusibility treatment and remove components other than carbon to increase the carbon content. For example, a heat treatment within a range of 300°C to 1000°C can advance formation of a condensed polycyclic aromatic structure and generate a decomposition gas to increase the carbon content.

Note that, the infusible fibers are not limited to fibers obtained by subjecting a thermoplastic fibers to an infusibility treatment. Any inorganic fibers may be used as long as the carbon content is within the above range.

### (Fiber Shape)

The infusible fibers are preferably short fibers. The short fibers indicate noncontinuous fibers. Although continuous fibers form fiber bundles in which the fibers are oriented in the same direction as in cloth or filament winding, the use of the fibers results in an aggregate (a mat or a blanket, or a papermaking product) of fibers oriented in random directions. Since a heat insulation material using the short fibers has a short conductive path, conductivity can be lowered even when carbonization progresses due to carbonized fibers or thermal runaway. In addition, the fibers are randomly oriented, and the fibers tend to come into point contact with each other, making it possible to lower heat conduction.

In the case of producing a heat insulation material containing infusible fibers, milled fibers or chopped fibers (fiber length: about 0.01 mm to 10 mm) of the infusible fiber are preferably used. The infusible fiber preferably has a fiber diameter of 1 µm to 30 µm. When the fiber diameter of the infusible fibers is 1 µm or more, even during exposure to a high temperature, a rate of air oxidation and sublimation can be suppressed and a flameproof effect can be maintained for a long time. On the other hand, when the fiber diameter of the infusible fibers is 30 µm or less, a certain degree of flexibility can be retained even during exposure to a high temperature and carbonization, and damages are less likely to occur even when deformation or impact occurs.

### <Organic Particles>

As the organic particles, hollow polystyrene particles or the like can be used.

### <Other Blending Materials>

### (Resin Binder)

The materials for the heat insulation material 2 in the present embodiment can also be bound by a resin binder. The resin binder is not particularly limited as long as it has a glass transition point lower than the glass transition point of the above single-component organic fibers. For example, a resin binder containing at least one selected from a styrene-butadiene resin, an acrylic resin, a silicone-acrylic resin, and a styrene resin can be used.

The glass transition point of the resin binder is not particularly defined, and is preferably -10°C or higher. Note that, when the glass transition point of the resin binder is equal to or higher than room temperature, in the case of using a heat insulation material containing the resin binder at room temperature, the strength of the heat insulation material can be further improved. Therefore, the glass transition point of the resin binder is, for example, more preferably 20°C or higher, still more preferably 30°C or higher, even more preferably 50°C or higher, and particularly preferably 60°C or higher.

A content of the resin binder is preferably 0.5 mass% or more, and more preferably 1 mass% or more with respect to the total mass of the heat insulation material. In addition, it is preferably 20 mass% or less, and more preferably 10 mass% or less.

### (Hot Melt Powder)

In addition to the inorganic particles, the inorganic fibers, the organic fibers, and the organic particles described above, a hot melt powder may be contained in a mixture in the case of producing the heat insulation material 2. In the case of using the above binder fibers having a core-sheath structure, the hot melt powder is a powder that contains, for example, a third organic material different from the first organic material and the second organic material, and has a property of being melted by heating. By containing the hot melt powder in the material mixture of the heat insulation material 2 and heating the same, when the hot melt powder is cooled after melting, the hot melt powder, including the surrounding inorganic particles, hardens. Therefore, falling off of the inorganic particles from the heat insulation material can be further suppressed.

Examples of the hot melt powder include those having various melting points, and it is sufficient to select a hot melt powder having an appropriate melting point in consideration of the melting points of the core portion and the sheath portion of the binder fibers used. In the case of using the binder fibers having a core-sheath structure as the organic fibers, when the third organic material, which is a component constituting the hot melt powder, has a melting point lower than that of the first organic material constituting the organic fibers, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fibers (core portion) and the surrounding molten sheath portion, and the hot melt powder present in gaps in the inorganic particles firstly harden. As a result, the position of the organic fibers can be fixed, and thereafter the molten sheath portion is fused to the organic fibers, making it easier to form a three-dimensional framework. Therefore, the strength of the entire heat insulation material can be further improved.

When the melting point of the third organic material constituting the hot melt powder is sufficiently lower than the melting point of the first organic material constituting the core portion, a setting tolerance of the heating temperature in the heating step can be expanded, and temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

In the case where the hot melt powder is contained in the materials of the heat insulation material in order to suppress the falling off of the inorganic particles, a powder falling suppression effect can be obtained even when a content thereof is very small. Therefore, the content of the hot melt powder is preferably 0.5 mass% or more, and more preferably 1 mass% or more, with respect to a total mass of the materials constituting the heat insulation material.

On the other hand, when the content of the hot melt powder is increased, the content of the inorganic particles or the like decreases relatively. Therefore, in order to obtain a desired heat insulation performance, the content of the hot melt powder is preferably 5 mass% or less, and more preferably 4 mass% or less, with respect to the total mass of the materials constituting the heat insulation material.

In the case where the hot melt powder is contained as the material for the heat insulation material, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the heat insulation material can be further improved, and the falling off of the inorganic particles can be prevented.

Note that, the heat insulation material 2 can further contain other binding agents, colorants, and the like, if necessary. All of these are useful for reinforcing the heat insulation material and improving the moldability, and a total amount thereof is preferably 10 mass% or less with respect to the total mass of the heat insulation material.

In the present invention, a method for producing the heat insulation material 2 is not particularly limited, and the heat insulation material 2 can be produced by using a generally used wet method and dry method. As the materials during the production, a material suitable for the production method may be selected from the materials listed above according to the required properties.

### [Inorganic Fiber Sheet]

The inorganic fiber sheet 3 in the present embodiment is obtained by processing inorganic fibers into a sheet shape, and the inorganic fibers to be used is not particularly limited. For example, the inorganic fibers described above for the heat insulation material 2 can also be used. Among them, silica fibers, alumina fibers, glass fibers, metal fibers, and the like are preferably used because of being inexpensive, having excellent handling properties, and having high heat resistance.

Note that, the inorganic fibers are not limited in shape such as a fiber diameter. However, in consideration of preventing the collision of scattered matters during thermal runaway, the smaller the opening is, the better.

### [Adhesive Layer]

The adhesive layer 4 in the present embodiment contains an organic material. The adhesive layer 4 in the present embodiment is formed, for example, by disposing an adhesive material composed of an organic material between the heat insulation material 2 and the inorganic fiber sheet 3 and performing heating and pressurization. At this time, since the inorganic particles 8 in the heat insulation material 2 enter the adhesive layer 4, the adhesive layer 4 also contains the inorganic particles 8. However, a content of the organic material is preferably 80 mass% or more with respect to a total mass of the adhesive layer.

The organic material is not particularly limited, and examples thereof include a synthetic rubber, a polyolefin-based organic material, a polyamide-based organic material, and a polyurethane-based organic material, and among them, it is preferable to contain at least one of a polyolefin-based organic material and a polyamide-based organic material. In particular, when a polyolefin-based organic material is used, the adhesive layer can be provided at a low cost, and when a polyamide-based organic material is used, the bonding strength can be improved. Therefore, the material for the adhesive layer may be selected according to the required properties.

Note that, specific examples of the polyolefin-based organic material include a polyethylene and a polypropylene. These materials have properties such as flexibility, absorption of impact, softness, low rigidity, easy deformation, and stretching into a film shape. Therefore, a polyethylene and a polypropylene can be suitably used as the material for the adhesive layer in the present embodiment.

### [Method for Producing Cover Protector]

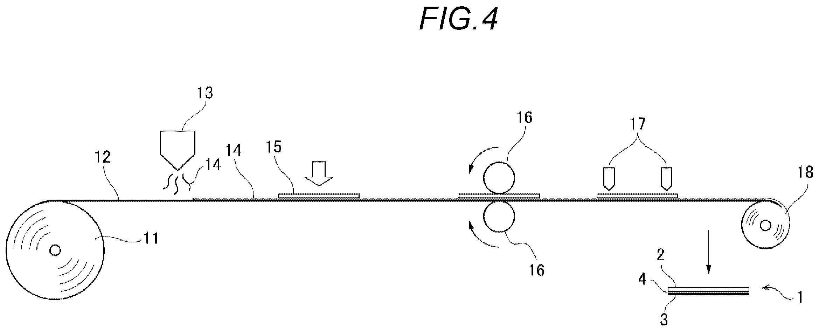

Fig. 4 is a schematic diagram showing an example of a method for producing the cover protector according to an embodiment of the present invention. A method of producing the cover protector will be described in order of steps with reference to Fig. 4.

### <Disposition Step>

A disposition step is a step of disposing the adhesive material constituting the adhesive layer between the heat insulation material and the inorganic fiber sheet. Specifically, an inorganic fiber sheet material 12 is pulled out from a wound sheet roll 11, and the fibrous adhesive material 14 is discharged from a plurality of nozzles 13 disposed above the inorganic fiber sheet material 12 while moving the inorganic fiber sheet material 12 in a horizontal direction. Thereafter, a heat insulation sheet material 15 is disposed on the inorganic fiber sheet material 12 on which the adhesive material 14 is disposed.

In the step of disposing the adhesive material 14 on an upper surface of the inorganic fiber sheet material 12, a plurality of fibrous adhesive materials 14 extending in a plurality of directions are disposed on the inorganic fiber sheet material 12 in a state of at least partially overlapping each other.

### <Bonding Step>

A bonding step is a step of heating and pressurizing a region in which the heat insulation material, the adhesive material, and the inorganic fiber sheet are stacked. Specifically, the inorganic fiber sheet material 12, the adhesive material 14, and the heat insulation sheet material 15 are further moved to pass between a set of hot rolls 16 disposed above and below these materials, thereby heating and pressurizing the region in which these materials are stacked. Thereafter, the inorganic fiber sheet material 12 and the heat insulation sheet material 15 are bonded to each other by cooling.

In the bonding step, the adhesive material 14 spreads and is fused in an overlapping region to form the island-like portion 5 shown in Fig. 2. In addition, in a region in which the island-like portion 5 is not formed, the adhesive material 14 has a slightly widened shape due to pressurization, but the fiber shape remains as it is, and the mesh-like portion 6 is formed.

### <Molding Step>

Thereafter, the region in which the inorganic fiber sheet material 12 and the heat insulation sheet material 15 are bonded to each other is cut by a cutting machine 17 or the like to be molded into a desired shape and size. Accordingly, the cover protector 1 in which the heat insulation material 2 and the inorganic fiber sheet 3 are bonded to each other by the adhesive layer 4 can be produced. Note that, unnecessary portions after cutting are wound by a winding roll 18.

According to the above production method, the adhesive layer 4 including the island-like portions 5 and the mesh-like portion 6 can be easily formed, and the heat insulation material 2 and the inorganic fiber sheet 3 can be firmly bonded to each other by the island-like portions 5. In addition, since the void portion 7 shown in Fig. 3 is formed by the mesh-like portion 6, it is possible to further improve the heat insulation performance as compared with the case where the heat insulation material 2 and the inorganic fiber sheet 3 are bonded to each other by a general bonding material.

Note that, the shape in which the fibrous adhesive material 14 is disposed is not particularly limited, and for example, the fibrous adhesive material 14 may be irregularly disposed like a nonwoven fabric. A plurality of fibrous adhesive materials 14 extending in a first direction, a second direction different from the first direction, and a third direction different from the first direction and the second direction may be disposed so as to overlap each other. In addition, a plurality of fibrous adhesive materials 14 may be disposed in a spiral shape or a wave shape.

In order to form the island-like portion 5, it is preferable to dispose the adhesive material 14 such that a disposition amount of the fibrous adhesive material in a plurality of first regions is larger than a disposition amount of the adhesive material in a second region other than the first regions. For example, the first region may be a region in which a plurality of fibrous adhesive materials 14 overlap each other. In addition, in order to form the island-like portions 5, the disposition amount of the adhesive material 14 in a desired region (first region) may be intentionally adjusted to be large.

The method for producing the cover protector 1 is not limited to the above method. For example, it is also possible to use a method in which an adhesive sheet is prepared in advance as the adhesive material, the adhesive sheet is disposed between a heat insulation material formed in a desired shape and an inorganic fiber sheet, and heating and pressurization are performed. The adhesive sheet is composed of an organic material and can be prepared by processing fibers extending in a plurality of directions into a sheet shape. At this time, fibers composed of the organic material may be disposed such that a density of the fibers in the plurality of first regions is higher than a density of the fibers in the second region. For example, by forming a region in which fibers overlap each other, this region can be used as the first region.

### [Battery Module]

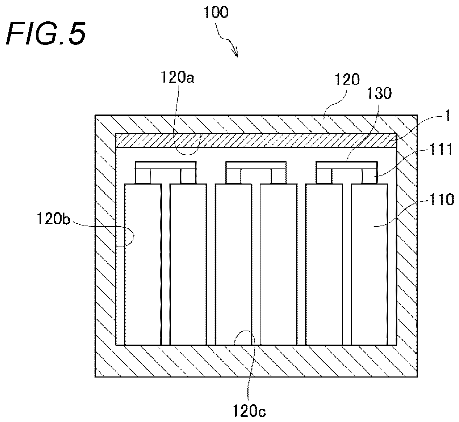

Fig. 5 is a cross-sectional view schematically showing a battery module according to an embodiment of the present invention. As shown in Fig. 5, a battery module 100 includes a plurality of storage batteries 110 housed in a battery case 120. In addition, electrode terminals 111 of the storage batteries 110 are connected in series by bus bars 130.

The battery case 120 has a ceiling surface 120a, a side wall surface 120b, and a bottom wall surface 120c inside. The cover protector 1 according to the present embodiment is attached to the entire ceiling surface 120a of the battery case 120 by a tape or the like. Note that, although not shown, the cover protector 1 is disposed such that the inorganic fiber sheet in the cover protector 1 faces the electrode terminal 111 and the heat insulation material in the cover protector 1 faces a ceiling surface side of the battery case 120.

In the battery module 100 configured as described above, since the cover protector 1 has an excellent heat insulation property, even in the case where the storage battery 110 undergoes thermal runaway and reaches a high temperature or ignites, heat transfer to the outside of the battery case 120 can be delayed. In addition, in the present embodiment, since the inorganic fiber sheet and the heat insulation material are bonded to each other with a high bonding force, in the case where the storage battery 110 ruptures due to thermal runaway, the inorganic fiber sheet can protect the heat insulation material without falling off, and the damage to the heat insulation material can be suppressed.

Note that, in the battery module 100 shown in Fig. 5, the cover protector 1 is attached only to the ceiling surface 120a of the battery case 120, but the present invention is not limited to this configuration. For example, by attaching the cover protector 1 to at least one of the ceiling surface 120a, the side wall surface 120b, and the bottom wall surface 120c of the battery case 120, the heat transfer to the outside of the battery case 120 can be delayed. In addition, when the cover protector 1 is attached to all of the ceiling surface 120a, the side wall surface 120b, and the bottom wall surface 120c of the battery case 120, the heat insulation property and the flameproof property can be further improved. Further, the cover protector 1 may be attached between the plurality of storage batteries 110.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-053777) filed on March 29, 2023 and a Japanese patent application (Japanese Patent Application No. 2024-018668) filed on February 9, 2024, and the contents thereof are incorporated herein by reference.

### REFERENCE SIGNS LIST

1 cover protector
2 heat insulation material
3 inorganic fiber sheet
4 adhesive layer
5 island-like portion
6 mesh-like portion
7 void portion
8 inorganic particle
14 adhesive material
100 battery module
110 storage battery
120 battery case

## Claims

1. A cover protector comprising:
a heat insulation material containing inorganic particles;
an inorganic fiber sheet; and
an adhesive layer bonding the heat insulation material and the inorganic fiber sheet and containing an organic material, wherein
the adhesive layer includes a plurality of island-like portions and a mesh-like portion connecting the plurality of island-like portions to each other when viewed in a stacking direction of the heat insulation material and the inorganic fiber sheet.

2. The cover protector according to claim 1, wherein the organic material contained in the adhesive layer is at least one kind selected from a synthetic rubber, a polyolefin-based organic material, a polyamide-based organic material, and a polyurethane-based organic material.

3. The cover protector according to claim 1, wherein a content of the organic material is 80 mass% or more with respect to a total mass of the adhesive layer.

4. The cover protector according to claim 1, wherein the mesh-like portion includes a plurality of linear bodies, and the plurality of linear bodies extend in a plurality of directions while partially intersecting each other to form the mesh-like portion.

5. The cover protector according to claim 1, wherein a void portion is provided between the inorganic fiber sheet and the heat insulation material.

6. The cover protector according to claim 1, wherein the organic material constituting the adhesive layer has entered a region of the inorganic fiber sheet from a surface in contact with the adhesive layer to an inside.

7. The cover protector according to claim 1, wherein the adhesive layer contains a part of the inorganic particles contained in the heat insulation material.

8. The cover protector according to claim 1, wherein the inorganic fiber sheet is obtained by processing at least one kind of fiber selected from silica fibers, alumina fibers, glass fibers, and metal fibers into a sheet shape.

9. A method for producing the cover protector according to any one of claims 1 to 8, the method comprising:
a disposition step of disposing an adhesive material constituting the adhesive layer between the heat insulation material and the inorganic fiber sheet; and
a bonding step of heating and pressurizing a region in which the heat insulation material, the adhesive material, and the inorganic fiber sheet are stacked, wherein
the disposition step includes a step of disposing a plurality of fibrous adhesive materials extending in a plurality of directions between the heat insulation material and the inorganic fiber sheet, and the adhesive materials are disposed such that a disposition amount of the adhesive materials in a plurality of first regions is larger than a disposition amount of the adhesive materials in a second region other than the first regions, and
in the bonding step, the island-like portions are formed in the first regions, and the mesh-like portion is formed in the second region.

10. The method for producing a cover protector according to claim 9, wherein each of the first regions is a region in which the plurality of fibrous adhesive materials overlap each other.

11. The method for producing a cover protector according to claim 9, wherein the adhesive material is obtained by processing fibers composed of an organic material and extending in a plurality of directions into a sheet shape, and the fibers are disposed such that a density of the fibers in the first regions is higher than a density of the fibers in the second region.

12. The method for producing a cover protector according to claim 11, wherein each of the first regions is a region in which the fibers overlap each other.

13. A battery module comprising:
the cover protector according to any one of claims 1 to 8;
a storage battery; and
a battery case housing the cover protector and the storage battery.

14. The battery module according to claim 13, wherein
the battery case has a ceiling surface, a side wall surface, and a bottom wall surface inside,
the heat insulation material is disposed so as to face at least one selected from the ceiling surface, the side wall surface, and the bottom wall surface, and
the cover protector is attached inside the battery case.
